# EUROPEAN PATENT APPLICATION

(11) **EP 4 803 783 A1**
(43) Date of publication of application: **09.09.2026**
(21) Application number: 24884357.5
(22) Date of filing: 30.09.2024
(51) Int. Cl.: F16H 57/04

(54) **OIL GUIDE MEMBER, GEAR, AND SPEED REDUCER ASSEMBLY**

(30) Priority: 31.10.2023 CN 202322947015 U
(71) Applicant: BYD Company Limited, Shenzhen, Guangdong 518118 (CN)
(72) Inventor: YU, Long, Shenzhen, Guangdong 518118 (CN); TANG, Lizhong, Shenzhen, Guangdong 518118 (CN); WANG, Hu, Shenzhen, Guangdong 518118 (CN); LI, Shuangbao, Shenzhen, Guangdong 518118 (CN); LI, Jinpeng, Shenzhen, Guangdong 518118 (CN)
(74) Representative: Mathys & Squire
(86) International application number: PCT/CN2024/122787
(87) International publication number: WO 2025/092352

(57) **Abstract**

A reducer assembly is provided. The reducer assembly includes a gear, and the gear includes an oil guide member. The oil guide member includes a first connecting portion and a second connecting portion. The first connecting portion is configured to be movably sleeved on a first rotating shaft. The second connecting portion is connected to the first connecting portion and extends in a direction away from the first connecting portion, so that the second connecting portion and the first connecting portion jointly define an oil storage cavity. A first oil outlet is formed on the oil storage cavity, and the first oil outlet is configured to be opposite to a second rotating shaft. The first rotating shaft can rotate under driving of the second rotating shaft to collect oil into the oil storage cavity, and lubricating oil in the oil storage cavity is guided to the second rotating shaft through the first oil outlet.

## Description

### CROSS-REFERENCE TO RELATED APPLICATIONS

This application claims priority to Chinese Patent Application No. 202322947015.6, filed with the China National Intellectual Property Administration on October 31, 2023 and entitled "OIL GUIDE MEMBER, GEAR, REDUCER ASSEMBLY AND VEHICLE THEREOF", which is incorporated herein by reference in its entirety.

### TECHNICAL FIELD

This application relates to the field of oil guiding technologies, and in particular, to an oil guide member, a gear, and a reducer assembly.

### BACKGROUND

During high-speed operation of a reducer assembly, friction occurs among components and a large amount of heat accumulates locally, which affects the function, performance, and service life of the reducer assembly. Therefore, a good lubrication system inside the reducer assembly plays an important role in use of the reducer assembly. A main reduction gear and a differential are components subjected to the largest force when the reducer assembly operates, so that lubrication of the main reduction gear and the differential is also extremely important.

In the related art, problems of poor lubrication of the main reduction gear and the differential is usually resolved by increasing an amount of oil. However, in the foregoing method, transmission efficiency of the differential is reduced, and costs are increased.

### SUMMARY

This application is intended to resolve at least one of technical problems in the conventional technologies. Therefore, an objective of this application is to provide an oil guide member, which improves lubrication efficiency of lubricating oil, so that lubrication of a second rotating shaft can be satisfied with less lubricating oil, thereby reducing the amount of required lubricating oil and lowering costs.

A second objective of this application is to provide a gear that uses the oil guide member.

A third objective of this application is to provide a reducer assembly that uses the oil guide member and the gear.

A fourth objective of this application is to provide a vehicle that uses the reducer assembly.

An oil guide member according to an embodiment of a first aspect of this application includes a first connecting portion, the first connecting portion being configured to be movably sleeved on a first rotating shaft; and a second connecting portion, the second connecting portion being connected to the first connecting portion and extending in a direction away from the first connecting portion, so that the second connecting portion and the first connecting portion jointly define an oil storage cavity, a first oil outlet being formed on a wall of the oil storage cavity, and the first oil outlet being configured to be opposite to a second rotating shaft. The first rotating shaft can rotate under driving of the second rotating shaft to collect oil into the oil storage cavity, and lubricating oil in the oil storage cavity is guided to the second rotating shaft through the first oil outlet.

According to the oil guide member in this embodiment of this application, the second connecting portion and the first connecting portion jointly define the oil storage cavity. The first rotating shaft can rotate under driving of the second rotating shaft to collect oil into the oil storage cavity, and the lubricating oil in the oil storage cavity is guided to the second rotating shaft through the first oil outlet, thereby improving lubrication efficiency of the lubricating oil. In this way, lubrication of the second rotating shaft can be satisfied with less lubricating oil, thereby reducing the amount of required lubricating oil and lowering costs.

According to some embodiments of this application, the first connecting portion includes an extension section extending in an axial direction of the first rotating shaft, and the extension section covers at least a part of the first rotating shaft in a circumferential direction of the first rotating shaft.

According to some embodiments of this application, the second connecting portion includes a first connecting section, and the first connecting section is disposed on a side of the extension section that is adjacent to the second rotating shaft. The first connecting section extends in an axial direction of the extension section to define the oil storage cavity together with the extension section.

According to some embodiments of this application, the second connecting portion further includes a second connecting section and a third connecting section. The second connecting section and the third connecting section extend in a circumferential direction of the extension section. The second connecting section and the third connecting section are located on a same side in a thickness direction of the first connecting section to jointly enclose the oil storage cavity.

According to some embodiments of this application, the second connecting portion further includes a protrusion. The protrusion is disposed on a side of the first connecting section that is adjacent to the second rotating shaft, and the first oil outlet runs through the first connecting section and the protrusion.

According to some embodiments of this application, a first opening is formed on the first connecting portion, and the first opening is configured to be opposite to the first rotating shaft.

According to some embodiments of this application, the first connecting portion is provided with a plurality of first oil guide ribs. The plurality of first oil guide ribs are all located in the oil storage cavity and are spaced apart in a circumferential direction of the first connecting portion.

According to some embodiments of this application, the first connecting portion is provided with a plurality of second oil guide ribs. The plurality of second oil guide ribs are respectively located on two sides of the first opening, and the plurality of second oil guide ribs are spaced apart in the circumferential direction of the first connecting portion.

According to some embodiments of this application, the oil guide member further includes a third connecting portion. The third connecting portion is connected to an outer periphery of the first connecting portion and extends in the direction away from the first connecting portion, and the third connecting portion is opposite to the first opening. A second opening is formed on the third connecting portion, and the second opening communicates with the first opening.

According to some embodiments of this application, the second connecting portion and the third connecting portion are spaced apart from each other in the circumferential direction of the first connecting portion. The first connecting portion is provided with a plurality of positioning posts. The plurality of positioning posts are spaced apart in the circumferential direction of the first connecting portion, and one of the plurality of positioning posts is located between the second connecting portion and the third connecting portion.

According to some embodiments of this application, the oil guide member further includes a fourth connecting portion. The fourth connecting portion is connected to the outer periphery of the first connecting portion and extends in the circumferential direction of the first connecting portion. The fourth connecting portion and the third connecting portion are respectively located on two sides in an axial direction of the first connecting portion.

According to some embodiments of this application, a surface on a side of the fourth connecting portion that is adjacent to the third connecting portion is provided with a plurality of first protruding ribs and a plurality of second protruding ribs. The plurality of first protruding ribs are spaced apart in a radial direction of the first connecting portion, and each of the first protruding ribs extends in the circumferential direction of the first connecting portion. The plurality of second protruding ribs are spaced apart in the circumferential direction of the first connecting portion, and each of the second protruding ribs extends in the radial direction of the first connecting portion.

According to some embodiments of this application, the first connecting portion is provided with a limiting protrusion, and a magnetic member is mounted on the limiting protrusion.

A gear according to an embodiment of a second aspect of this application includes a shaft portion, an outer periphery of the shaft portion being suitable for sleeving a first bearing; a tooth portion, the tooth portion being disposed at one end of the shaft portion and configured to rotate following the shaft portion; and an oil guide passage, the oil guide passage being formed inside the shaft portion and/or the tooth portion, and two ends of the oil guide passage being respectively opposite to a first oil outlet of an oil guide member and the first bearing. The oil guide member is the oil guide member according to the embodiment of the first aspect of this application.

According to some embodiments of this application, an oil baffle plate is disposed on a side inside the oil guide passage that is close to the first oil outlet. At least one through hole is formed on the oil baffle plate, and the first oil outlet communicates with the oil guide passage through the through hole.

According to some embodiments of this application, a third passage is formed on the shaft portion, and the third passage communicates with the first passage.

A reducer assembly according to an embodiment of a third aspect of this application includes a housing, a differential being disposed in the housing; an oil guide member, the oil guide member being movably sleeved on a rotating shaft of the differential, and the oil guide member being the oil guide member according to the embodiment of the first aspect of this application; a drive gear; and a driven gear, the drive gear meshing with the driven gear, the driven gear being fixedly connected to the differential, the driven gear being sleeved on the rotating shaft of the differential and being configured to stir oil in the housing after being driven by the drive gear to provide lubricating oil, and the drive gear being the gear according to the embodiment of the second aspect of this application.

According to some embodiments of this application, the oil guide member is fixedly connected to the housing.

A vehicle according to an embodiment of a fourth aspect of this application includes the reducer assembly according to the embodiment of the third aspect of this application.

Some of additional aspects and advantages of this application are provided in the following descriptions, and some of the additional aspects and the advantages become apparent from the following descriptions or are learned from practice of this application.

### BRIEF DESCRIPTION OF DRAWINGS

The foregoing and/or additional aspects and advantages of this application will be clear and easily understood from the description of the embodiments taken in conjunction with the following drawings.
FIG. 1 is a schematic diagram of an oil guide member according to an embodiment of this application;
FIG. 2 is a schematic diagram of the oil guide member shown in FIG. 1 from another angle;
FIG. 3 is an assembly diagram of a reducer assembly according to an embodiment of this application;
FIG. 4 is an assembly diagram of a reducer assembly according to an embodiment of this application, where a drive gear is not shown;
FIG. 5 is an assembly diagram of a drive gear and an oil guide member of a reducer assembly according to an embodiment of this application;
FIG. 6 is a cross-sectional view of the drive gear and the oil guide member shown in FIG. 5;
FIG. 7 is a cross-sectional view of a drive gear of a reducer assembly according to an embodiment of this application;
FIG. 8 is a schematic diagram of a housing of a reducer assembly according to an embodiment of this application; and
FIG. 9 is a schematic block diagram of a vehicle according to an embodiment of this application.

### Reference numerals:

vehicle 1000;
oil guide member 100;
first connecting portion 1; first oil guide rib 11; second oil guide rib 12; positioning post 13; limiting protrusion 14; first opening 15; extension section 16; second connecting portion 2; first connecting section 21; second connecting section 22; third connecting section 23; first oil outlet 24; oil storage cavity 25; protrusion 26; second rotating shaft 27; third connecting portion 3; second opening 31; fourth connecting portion 4; first protruding rib 41; second protruding rib 42; magnetic member 5;
gear (drive gear) 200; shaft portion 201; oil guide passage 2011; first passage 20111; second passage 20112; third passage 20113; first bearing 202; oil inlet 2021; tooth portion 203;
reducer assembly 300; differential 301; driven gear 303; oil baffle plate 304; through hole 3041; housing 305; second bearing 306; and third bearing 307.

### DESCRIPTION OF EMBODIMENTS

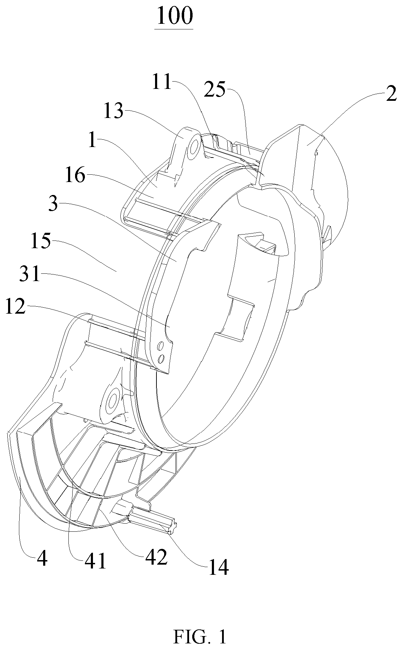

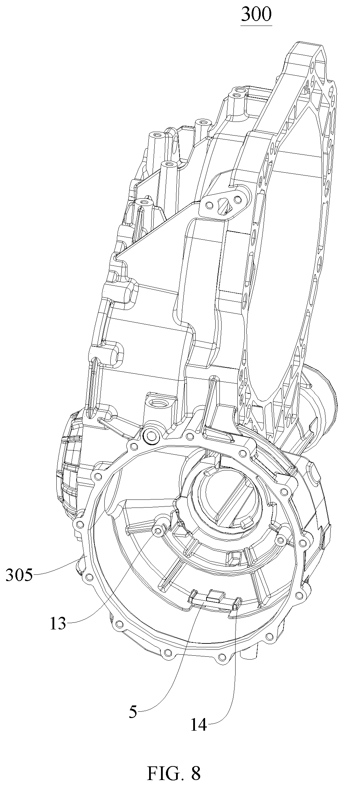

The following describes an oil guide member 100 according to an embodiment of a first aspect of this application with reference to FIG. 1 to FIG. 8.

As shown in FIG. 1 to FIG. 8, the oil guide member 100 according to the embodiment of the first aspect of this application includes a first connecting portion 1 and a second connecting portion 2.

Specifically, the first connecting portion 1 is configured to be movably sleeved on a first rotating shaft. The second connecting portion 2 is connected to the first connecting portion 1 and extends in a direction away from the first connecting portion 1, so that the second connecting portion 2 and the first connecting portion 1 jointly define an oil storage cavity 25. A first oil outlet 24 is formed on a wall of the oil storage cavity 25, and the first oil outlet 24 is configured to be opposite to a second rotating shaft 27. The first rotating shaft can rotate under driving of the second rotating shaft 27 to collect oil into the oil storage cavity 25, and lubricating oil in the oil storage cavity 25 is guided to the second rotating shaft 27 through the first oil outlet 24.

For example, in examples in FIG. 1 to FIG. 6, the first connecting portion 1 extends in a circumferential direction of the first rotating shaft, for example, a rotating shaft of a differential 301. In this case, a shape of the first connecting portion 1 is approximately annular. In a thickness direction of the first connecting portion 1, the second connecting portion 2 is disposed on a side of the first connecting portion 1 that is away from the first rotating shaft. The second connecting portion 2 defines a movement path of the lubricating oil, to prevent the lubricating oil from flowing out from an edge of the first connecting portion 1, thereby improving use efficiency of the lubricating oil. In addition, the second connecting portion 2 guides the lubricating oil, so that the lubricating oil flows along a surface of the first connecting portion 1 onto the second rotating shaft 27, for example, a shaft portion 201 of a drive gear 200, thereby enabling the lubricating oil to lubricate the second rotating shaft 27 as much as possible. In this way, compared with a conventional lubrication method of increasing an amount of lubricating oil, use efficiency of lubricating oil is improved, and lubrication of the second rotating shaft 27 can be satisfied with less lubricating oil.

A first oil outlet 24 is formed on an inner wall on a side of the oil storage cavity 25 that is close to the second rotating shaft 27, so that the first oil outlet 24 is opposite to the second rotating shaft 27. In addition, under the action of gravity, most lubricating oil accumulates at a bottom of a component using the oil guide member 100. To ensure that at least a part of the first rotating shaft can be in contact with the lubricating oil accumulated at the bottom of the component, a height between an edge of the first rotating shaft and the bottom of the component can be made less than a height of a liquid level of the lubricating oil.

In a working process of the oil guide member 100, the second rotating shaft 27 drives the first rotating shaft to rotate clockwise or counterclockwise. In this case, the first rotating shaft may stir the lubricating oil accumulated at the bottom, and moves the lubricating oil from the edge of the first rotating shaft to a center of the first rotating shaft under the action of a centrifugal force. In addition, the first rotating shaft may throw a part of the lubricating oil onto the first connecting portion 1. When flowing on the first rotating shaft, the lubricating oil lubricates the first rotating shaft. The lubricating oil thrown onto the first connecting portion 1 is blocked by the second connecting portion 2 and then flows into the oil storage cavity 25, and then flows onto the second rotating shaft 27 through the first oil outlet 24, so that the lubricating oil can lubricate the second rotating shaft 27.

In this way, without increasing the amount of lubricating oil or using a complex active lubrication system, the lubrication problem for the second rotating shaft 27 is resolved, and the second rotating shaft 27 and the first rotating shaft can be effectively lubricated. In addition, a structure of the oil guide member 100 is simplified, and production costs of the oil guide member 100 are reduced.

According to the oil guide member 100 in this embodiment of this application, the second connecting portion 2 and the first connecting portion 1 jointly define the oil storage cavity 25. The first rotating shaft can rotate under driving of the second rotating shaft 27 to collect oil into the oil storage cavity 25, and the lubricating oil in the oil storage cavity 25 is guided to the second rotating shaft 27 through the first oil outlet 24, thereby improving lubrication efficiency of the lubricating oil. In this way, lubrication of the second rotating shaft 27 can be satisfied with less lubricating oil, thereby reducing an amount of required lubricating oil and lowering costs.

According to some embodiments of this application, the first connecting portion 1 includes an extension section 16 extending in an axial direction of the first rotating shaft, and the extension section 16 covers at least a part of the first rotating shaft in a circumferential direction of the first rotating shaft. In other words, the extension section 16 in the circumferential direction of the first rotation shaft covers a part of the first rotation shaft (referring to FIG. 1 to FIG. 6), or the extension section 16 in the circumferential direction of the first rotation shaft fully covers the first rotation shaft (not shown in the figure). In such a disposition, the oil guide member 100 can be reliably connected to the first rotating shaft through the extension section 16, so that the first connecting portion 1 can receive as much lubricating oil from the first rotating shaft as possible, thereby improving oil stirring efficiency of the first rotating shaft, improving lubrication efficiency of the lubricating oil, and further reducing an amount of required lubricating oil.

According to some embodiments of this application, the second connecting portion 2 includes a first connecting section 21, and the first connecting section 21 is disposed on a side of the extension section 16 that is adjacent to the second rotating shaft 27. The first connecting section 21 extends in an axial direction of the extension section 16 to define the oil storage cavity 25 together with the extension section 16. In such a disposition, the first connecting section 21 is located downstream of a flow path of lubricating oil, which helps to block the lubricating oil, so that the lubricating oil can accumulate in the oil storage cavity 25, and then the lubricating oil flows to the second rotating shaft 27 through the first oil outlet 24, thereby lubricating the second rotating shaft 27.

Further, the second connecting portion 2 further includes a second connecting section 22 and a third connecting section 23. The second connecting section 22 and the third connecting section 23 extend in a circumferential direction of the extension section 16. The second connecting section 22 and the third connecting section 23 are located on a same side in a thickness direction of the first connecting section 21 to jointly enclose the oil storage cavity 25. As shown in FIG. 1 to FIG. 6, in the axial direction of the first rotating shaft, the second connecting section 22 and the third connecting section 23 are respectively disposed on two sides in a length direction of the first connecting portion 1. One end of each of the first connecting section 21, the second connecting section 22, and the third connecting section 23 is connected to the first connecting portion 1, and the other end of each of the first connecting section 21, the second connecting section 22, and the third connecting section 23 extends in the direction away from the first connecting portion 1, so that the oil storage cavity 25 is formed on a side of the first connecting portion 1 that is away from a center of the first connecting portion 1. In this case, the second connecting portion 2 is U-shaped, to block flow of lubricating oil, thereby facilitating storage of lubricating oil falling onto a surface of the first connecting portion 1, and further fully lubricating the second rotating shaft 27.

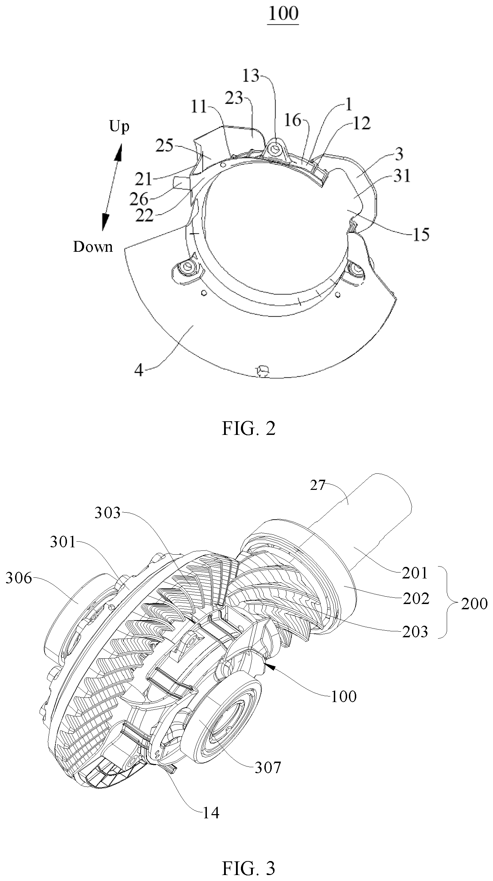

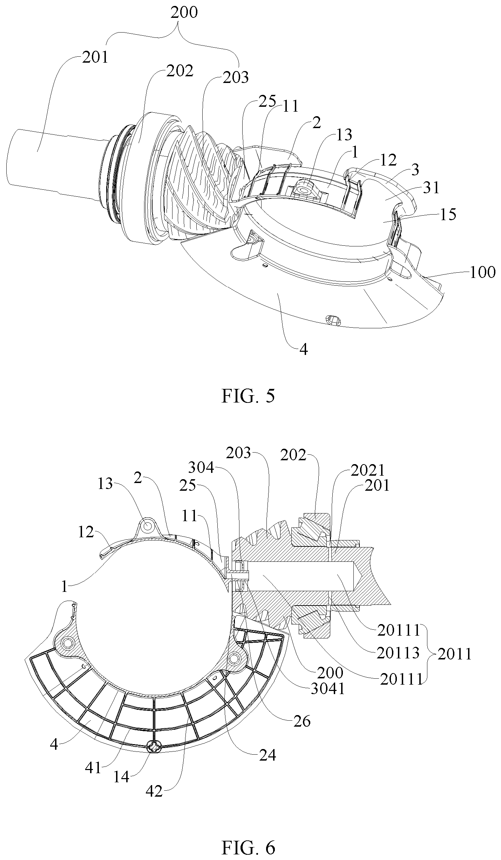

Still further, the second connecting portion 2 further includes a protrusion 26. The protrusion 26 is disposed on a side of the first connecting section 21 that is adjacent to the second rotating shaft 27, and the first oil outlet 24 runs through the first connecting section 21 and the protrusion 26. Referring to FIG. 2 and FIG. 6, the protrusion 26 is disposed on a side of the first connecting section 21 that is away from the oil storage cavity 25. The protrusion 26 extends in a direction away from the first connecting section 21, and at least a part of the protrusion 26 is connected to the second rotating shaft 27. In this way, a length of the first oil outlet 24 is extended, so that the lubricating oil can flow along the first oil outlet 24 to the second rotating shaft 27, thereby improving lubrication of the second rotating shaft 27 and avoiding waste of the lubricating oil.

According to some embodiments of this application, a first opening 15 is formed on the first connecting portion 1, and the first opening 15 is configured to be opposite to the first rotating shaft. Referring to FIG. 1 to FIG. 6, the first opening 15 communicates the first rotating shaft with the first connecting portion 1. Lubricating oil can flow from the first opening 15 to the first rotating shaft, so as to further lubricate the first rotating shaft to improve operational smoothness of the first rotating shaft. In addition, a weight of the oil guide member 100 can be reduced, thereby facilitating a lightweight design of the oil guide member 100.

According to some embodiments of this application, the first connecting portion 1 is provided with a plurality of first oil guide ribs 11. The plurality of first oil guide ribs 11 are all located in the oil storage cavity 25 and are spaced apart in the circumferential direction of the first connecting portion 1. Each of the first oil guide ribs 11 extends in an axial direction of the first connecting portion 1. In the description of this application, "a plurality of" means two or more. Referring to FIG. 1 to FIG. 6, three first oil guide ribs 11 are disposed on the first connecting portion 1. The three first oil guide ribs 11 are spaced apart in the circumferential direction of the first connecting portion 1 to guide the lubricating oil on the first connecting portion 1. To be specific, the lubricating oil flows from a higher position to a lower position on the first connecting portion 1 under the action of gravity. The first oil guide rib 11 is of a specific height and can play a role of blocking the lubricating oil, so that a part of the lubricating oil on the first connecting portion 1 can flow through the first oil guide rib 11 toward the side of the oil storage cavity 25 that is close to the second rotating shaft 27, and then flow through the first oil outlet 24 to the second rotating shaft 27. Afterwards, another part of the lubricating oil flows along the first oil guide rib 11 to another component that needs to be lubricated. In addition, the first oil guide rib 11 can also enhance structural strength of the first connecting portion 1, thereby prolonging service life of the oil guide member 100.

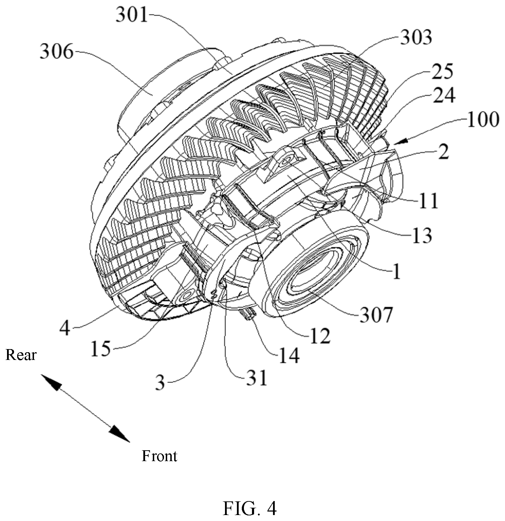

Further, the first connecting portion 1 is provided with a plurality of second oil guide ribs 12, and the plurality of second oil guide ribs 12 are spaced apart in the circumferential direction of the first connecting portion 1. The plurality of second oil guide ribs 12 are respectively located on two sides of the first opening 15, and each of the second oil guide ribs 12 extends in the axial direction of the first connecting portion 1. For example, in examples of FIG. 3 and FIG. 4, two second oil guide ribs 12 are respectively disposed on two sides in a length direction of the first opening 15, and two second oil guide ribs 12 located on the same side are spaced apart from each other in the circumferential direction of the first connecting portion 1. The second oil guide rib 12 is of a specific height and can play a role of blocking the lubricating oil, so that a part of the lubricating oil on the first connecting portion 1 flows through the second oil guide rib 12 to the first opening 15, and flows through the first opening 15 to the first rotating shaft. Then, another part of the lubricating oil flows along the second oil guide rib 12 to another component that needs to be lubricated. In addition, the second oil guide rib 12 can further enhance the structural strength of the first connecting portion 1, thereby prolonging service life of the oil guide member 100.

According to some embodiments of this application, the oil guide member 100 further includes a third connecting portion 3. The third connecting portion 3 is connected to an outer periphery of the first connecting portion 1 and extends in the direction away from the first connecting portion 1. The third connecting portion 3 is opposite to the first opening 15. A second opening 31 is formed on the third connecting portion 3, and the second opening 31 communicates with the first opening 15. Referring to FIG. 1 to FIG. 6, in the axial direction of the first connecting portion 1, the third connecting portion 3 is opposite to the first opening 15, and the second opening 31 runs through the third connecting portion 3 in a thickness direction of the third connecting portion 3. In this way, when the lubricating oil flows to the first rotating shaft, a part of the lubricating oil can flow along the second oil guide rib 12 to the second opening 31. The lubricating oil can be guided out to another component through the second opening 31, thereby avoiding oil stirring losses.

Further, the second connecting portion 2 and the third connecting portion 3 are spaced apart from each other in the circumferential direction of the first connecting portion 1. The first connecting portion 1 is provided with a plurality of positioning posts 13, and the plurality of positioning posts 13 are spaced apart in the circumferential direction of the first connecting portion 1. One of the plurality of positioning posts 13 is located between the second connecting portion 2 and the third connecting portion 3. As shown in FIG. 1 and FIG. 6, the second connecting portion 2 and the third connecting portion 3 are spaced apart from each other in the circumferential direction of the first connecting portion 1. Three positioning posts 13 are formed on the first connecting portion 1. The three positioning posts 13 are spaced apart in the circumferential direction of the first connecting portion 1, and the oil guide member 100 is fastened by cooperation between the positioning posts 13 and fasteners, so that use stability of the oil guide member 100 is improved. One positioning post 13 is disposed between the second connecting portion 2 and the third connecting portion 3. Because an impact of the lubricating oil from the first rotating shaft is relatively large, the positioning post 13 can block the lubricating oil, thereby buffering and diverting the lubricating oil by using the positioning post 13, and ensuring that the lubricating oil can flow to the oil storage cavity 25.

In some optional embodiments, the oil guide member 100 further includes a fourth connecting portion 4. The fourth connecting portion 4 is connected to the outer periphery of the first connecting portion 1 and extends in the circumferential direction of the first connecting portion 1, and the fourth connecting portion 4 and the third connecting portion 3 are respectively located on two sides in the axial direction of the first connecting portion 1. In such a disposition, the lubricating oil from the first rotating shaft is prevented from being excessive, and excess lubricating oil can flow in the direction away from the first connecting portion 1 under guidance of the fourth connecting portion 4, thereby avoiding a case that an amount of oil stirred toward the first connecting portion 1 is reduced due to a relatively low liquid level of the lubricating oil, and further effectively improving oil stirring efficiency of the oil guide member 100.

Further, a surface on a side of the fourth connecting portion 4 that is adjacent to the third connecting portion 3 is provided with a plurality of first protruding ribs 41 and a plurality of second protruding ribs 42. The plurality of the first protruding ribs 41 are spaced apart in a radial direction of the first connecting portion 1, and each of the first protruding ribs 41 extends in the circumferential direction of the first connecting portion 1. The plurality of second protruding ribs 42 are spaced apart in the circumferential direction of the first connecting portion 1, and each of the second protruding ribs 42 extends in the radial direction of the first connecting portion 1. Referring to FIG. 1 and FIG. 6, three first protruding ribs 41 and eleven second protruding ribs 42 are disposed on the fourth connecting portion 4. The three first protruding ribs 41 are spaced apart in the radial direction of the first connecting portion 1, and the eleven second protruding ribs 42 are spaced apart in the circumferential direction of the first connecting portion 1. The first protruding ribs 41 intersect with the second protruding ribs 42. In this way, structural strength of the fourth connecting portion 4 is improved, thereby enhancing use stability and prolonging service life of the fourth connecting portion 4. In addition, the first protruding ribs 41 and the second protruding ribs 42 can also provide a guiding function.

According to some embodiments of this application, the first connecting portion 1 is provided with a limiting protrusion 14, and a magnetic member 5 is mounted on the limiting protrusion 14. During an initial running-in process and after long-time operation of the first rotating shaft, the second rotating shaft 27, and another component, some metal particles may generate. The generated metal chips can be collected by using the magnetic member 5, thereby preventing the metal chips from mixing into the lubricating oil and damaging the first rotating shaft, the second rotating shaft 7, and another component. In this way, operational stability of the first rotating shaft, the second rotating shaft 27, and another component is improved.

Referring to FIG. 1, FIG. 3, FIG. 4, FIG. 6, and FIG. 8, one limiting protrusion 14 is disposed on the first connecting portion 1. The limiting protrusion 14 is disposed on a side of the first connecting portion 1 that is away from the first rotation shaft, and the limiting protrusion 14 extends in a direction away from the first rotation shaft. The magnetic member 5 can be mounted on the limiting protrusion 14. The limiting protrusion 14 is used to position the magnetic member 5, which prevents the magnetic member 5 from interfering with operation of another component adjacent to the oil guide member 100. In addition, the magnetic member 5 is fastened in a simple way, which helps reduce mounting costs of the magnetic member 5.

Optionally, a cross section of the limiting protrusion 14 may be T-shaped or cross-shaped (as shown in the figure). This is not limited herein.

Referring to FIG. 5 to FIG. 7, a gear 200 according to an embodiment of a second aspect of this application includes a shaft portion 201, a tooth portion 203, and an oil guide passage 2011. An outer periphery of the shaft portion 201 is suitable for sleeving a first bearing 202. The tooth portion 203 is disposed at one end of the shaft portion 201, and is configured to rotate following the shaft portion 201. The oil guide passage 2011 is formed inside the shaft portion 201 and/or the tooth portion 203, and two ends of the oil guide passage 2011 are respectively opposite to the first oil outlet 24 of the oil guide member 100 and the first bearing 202. The oil guide member 100 is the oil guide member 100 according to the embodiment of the first aspect of this application.

Optionally, the oil guide passage 2011 is formed only inside the shaft portion 201 (not shown in the figure); or the oil guide passage 2011 is formed only inside the tooth portion 203 (referring to FIG. 6); or the oil guide passage 2011 is formed inside both the shaft portion 201 and the tooth portion 203 (not shown in the figure).

According to the gear 200 in this embodiment of this application, the oil guide member 100 is used to improve lubrication efficiency of the gear 200, thereby improving operational smoothness of the gear 200, and further increasing market competitiveness of the gear 200.

According to some embodiments of this application, the oil guide passage 2011 includes a first passage 20111 and a second passage 20112 communicating with each other. The first passage 20111 extends in an axial direction of the tooth portion 203, and the second passage 20112 extends in a radial direction of the shaft portion 201 to the first bearing 202.

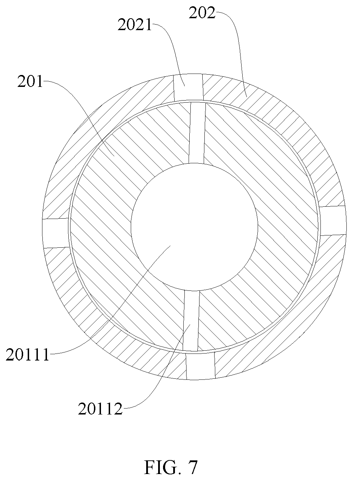

As shown in FIG. 6 and FIG. 7, two second passages 20112 spaced apart from each other are formed on a side wall of the first passage 20111, and the two second passages 20112 extend in a direction away from a center of the first passage 20111. In addition, four oil inlets 2021 are formed on the first bearing 202. When the first bearing 202 rotates, any second passage 20112 can communicate with any oil inlet 2021, that is, one end of the oil guide passage 2011 communicates with the oil inlet 2021 of the first bearing 202. In this way, lubricating oil flows from the first oil outlet 24 on the first connecting portion 1 into the first passage 20111, then flows from the first passage 20111 into the second passage 20112, and finally enters the first bearing 202 through the oil inlet 2021 communicating with the second passage 20112, to lubricate the first bearing 202.

As shown in FIG. 6, an aperture of the first passage 20111 is greater than an aperture of the second passage 20112, so that a volume of the first passage 20111 is relatively large. A volume of lubricating oil that can be stored in the first passage 20111 is greater than a volume of lubricating oil flowing from the second passage 20112 to the first bearing 202, so that the lubricating oil in the first passage 20111 can rapidly flow toward the first bearing 202 along the second passage 20112 and the oil inlet 2021 under the action of a pressing force, thereby effectively improving a lubrication effect on the first bearing 202. In addition, this can prevent an excessive amount of lubricating oil from flowing toward the first bearing 202, which affects rotation of the first bearing 202, and can also reduce oil consumption.

Optionally, the tooth portion 203 may be a spur gear or a helical gear, which is not specifically limited herein.

Further, in an axial direction of the shaft portion 201, a length of the first passage 20111 is equal to a maximum distance of the tooth portion 203, that is, the first passage 20111 runs through the tooth portion 203. In this way, the length of the first passage 20111 in the axial direction of the shaft portion 201 can meet a disposition requirement of the second passage 20112. In other words, the second passage 20112 can be disposed on a side of the first bearing 202 that is away from the tooth portion 203, thereby improving lubrication efficiency of the first bearing 202.

According to some embodiments of this application, an oil baffle plate 304 is disposed on a side inside the oil guide passage 2011 that is close to the first oil outlet 24. At least one through hole 3041 is formed on the oil baffle plate 304, and the first oil outlet 24 communicates with the oil guide passage 2011 through the through hole 3041. Referring to FIG. 6, the oil baffle plate 304 can seal one end of the first passage 20111 facing the first rotating shaft, so that an end of the first passage 20111 away from the first rotating shaft communicates with the first oil outlet 24 through the through hole 3041, thereby preventing the lubricating oil in the first passage 20111 from flowing back to the oil guide member 100, and further ensuring that the lubricating oil in the first passage 20111 can fully lubricate the first bearing 202.

Further, the oil baffle plate 304 is disposed on a side of the first passage 20111 that is adjacent to the first oil outlet 24. In such a disposition, the volume of the first passage 20111 is effectively increased, thereby increasing an amount of oil stored in the first passage 20111, and further improving the lubrication effect on the first bearing 202.

According to some embodiments of this application, referring to FIG. 6, a third passage 20113 is formed on the shaft portion 201, and the third passage 20113 communicates with the first passage 20111. In an axial direction of the first bearing 202, the third passage 20113 is formed on a side of the first passage 20111 that is away from the oil guide member 100, to enlarge an oil storage region in the tooth portion 203 and the shaft portion 201, thereby facilitating lubrication of the first bearing 202.

A reducer assembly 300 according to an embodiment of a third aspect of this application includes a housing 305, an oil guide member 100, a drive gear 200, and a driven gear 303. A differential 301 is disposed in the housing 305. The oil guide member 100 is movably sleeved on a rotating shaft of the differential 301. The oil guide member 100 is the oil guide member 100 according to the embodiment of the first aspect of this application. The drive gear 200 meshes with the driven gear 303. The driven gear 303 is fixedly connected to the differential 301. The driven gear 303 is sleeved on the rotating shaft of the differential 301, and is configured to stir oil in the housing 305 after being driven by the drive gear 200 to provide lubricating oil. The drive gear 200 is the gear 200 according to the embodiment of the second aspect of this application. The reducer assembly 300, serving as a connecting member between a power unit and an execution unit, can provide functions of transmitting torque, changing a direction, and reducing a rotational speed.

For example, in an example of FIG. 3, the driven gear 303 is disposed on a side in an axial direction (for example, a front/rear direction in the figure) of the differential 301, and the drive gear 200 is disposed in a circumferential direction of the differential 301 and extends in a radial direction of the differential 301. The driven gear 303 meshes with the drive gear 200. In this way, when the drive gear 200 rotates under driving of a drive member, due to meshing between the driven gear 303 and the drive gear 200, a driving force can be transmitted to the driven gear 303. The driven gear 303 rotates to drive the differential 301 to operate. The differential 301 can reduce a rotational speed transmitted by the drive gear 200, thereby fulfilling the functions of the reducer assembly 300 of transmitting torque, changing a direction, and reducing a rotational speed.

The oil guide member 100 is disposed on a side of the driven gear 303 that is close to the drive gear 200. In other words, in the axial direction of the differential 301, the oil guide member 100 is located on a side of the driven gear 303 that is away from the differential 301. The first oil outlet 24 is formed on a side of the oil guide member 100 that is close to the drive gear 200, so that the first oil outlet 24 is opposite to the drive gear 200. In addition, most lubricating oil accumulates at a bottom of the housing 305 under the action of gravity. To ensure that at least a part of the driven gear 303 can be in contact with the lubricating oil accumulated at the bottom of the housing 305, a height between an edge of the driven gear 303 and the bottom of the housing 305 can be made lower than a height of a liquid level of the lubricating oil.

In a working process of the reducer assembly 300, the drive gear 200 drives the driven gear 303 to rotate clockwise or counterclockwise. In this case, the driven gear 303 may stir the lubricating oil accumulated at the bottom of the housing 305, and move the lubricating oil from the edge of the driven gear 303 to a center of the driven gear 303 under the action of a centrifugal force. In addition, the driven gear 303 may throw a part of the lubricating oil onto the first connecting portion 1 of the oil guide member 100. When flowing on the driven gear 303, the lubricating oil may lubricate the driven gear 303. The lubricating oil thrown onto the first connecting portion 1 flows to the first oil outlet 24, and flows through the first oil outlet 24 onto the drive gear 200, so that the lubricating oil can lubricate the drive gear 200.

In this way, without increasing the amount of lubricating oil or using a complex active lubrication system, the lubrication problem for the reducer assembly 300 is resolved. Compared with a conventional reducer assembly, the drive gear 200 and the driven gear 303 can be effectively lubricated, thereby ensuring transmission efficiency of a vehicle. In addition, a structure of the reducer assembly 300 is simplified and production costs of the reducer assembly 300 are reduced.

According to the reducer assembly 300 in this embodiment of this application, the oil guide member 100 is disposed on the rotating shaft of the differential 301. In this way, compared with the conventional reducer assembly, the problem of low lubrication efficiency of the reducer assembly 300 is resolved, thereby ensuring transmission efficiency of the vehicle. In addition, the structure of the reducer assembly 300 is simplified and the production costs of the reducer assembly 300 are reduced.

According to some embodiments of this application, the oil guide member 100 is fixedly connected to the housing 305. In such a disposition, it is helpful to improve stability of a connection between the oil guide member 100 and the housing 305, thereby improving use stability of the reducer assembly 300 and prolonging service life of the reducer assembly 300.

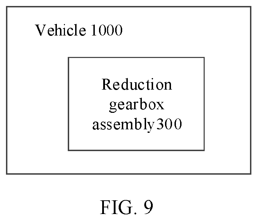

A vehicle 1000 according to an embodiment of a fourth aspect of this application includes the reducer assembly 300 according to the embodiment of the third aspect of this application, as shown in FIG. 9.

According to the vehicle 1000 in this embodiment of this application, the oil guide member 100 and/or the reducer assembly 300 is used to improve a lubricating effect of lubricating oil, to make the vehicle 1000 smoother during operation, thereby effectively improving user experience, and increasing market competitiveness of the vehicle.

According to some embodiments of this application, referring to FIG. 3 and FIG. 4, the reducer assembly 300 further includes a second bearing 306 and a third bearing 307. The second bearing 306 is disposed on a side of the differential 301 that is away from the oil guide member 100, and the third bearing 307 is disposed on a side of the differential 301 that is adjacent to the oil guide member 100. In other words, the second bearing 306 and the third bearing 307 are respectively disposed on two sides in an axial direction of the differential 301, thereby improving operational stability of the differential 301.

Other components and operations of the vehicle 1000 according to embodiments of this application are known to a person of ordinary skill in the art, and are not described in detail herein.

In the description of this application, it will be understood that the orientations or positional relationships indicated by terms "center", "length", "width", "thickness", "upper", "lower", "front", "back", "left", "right", "top", "bottom", "inside", "outside", "axial", "radial", and "circumferential" are based on the orientations or positional relationships shown in the drawings and are only for convenience of description of this application and simplification of description rather than indicating or implying that the apparatus or element referred to needs to have a particular orientation or be constructed and operated in a particular orientation, and therefore, will not be understood as a limitation on this application.

In the descriptions of this application, it will be noted that, unless otherwise explicitly specified and defined, the terms "mounted", "connected", and "connection" will be understood in a broad sense. For example, the connection may be a fixed connection, a detachable connection, or an integrated connection; may be a mechanical connection or an electrical connection; may be a direct connection or an indirect connection through an intermediate medium; or may be internal communication between two elements. A person of ordinary skill in the art will understand specific meanings of the foregoing terms in this application based on specific situations.

In the description of this specification, descriptions referring to the terms such as "one embodiment", "some embodiments", "example embodiments", "examples", "specific examples", or "some examples" mean that specific features, structures, materials, or characteristics described with reference to this embodiment or example are included in at least one embodiment or example of this application. In this specification, illustrative expressions of the foregoing terms do not necessarily refer to a same embodiment or example.

Although embodiments of this application have been shown and described, a person of ordinary skill in the art will understand that many changes, modifications, replacements, and variations can be made to these embodiments without departing from the principles and purposes of this application, and the scope of this application is defined by the claims and their equivalents.

## Claims

1. An oil guide member (100), comprising:
a first connecting portion (1), the first connecting portion (1) being configured to be movably sleeved on a first rotating shaft; and
a second connecting portion (2), the second connecting portion (2) being connected to the first connecting portion (1) and extending in a direction away from the first connecting portion (1), so that the second connecting portion (2) and the first connecting portion (1) jointly define an oil storage cavity (25), a first oil outlet (24) being formed on a wall of the oil storage cavity (25), and the first oil outlet (24) being configured to be opposite to a second rotating shaft (27), wherein
the first rotating shaft is capable of rotating under driving of the second rotating shaft (27) to collect oil into the oil storage cavity (25), and lubricating oil in the oil storage cavity (25) is guided to the second rotating shaft (27) through the first oil outlet (24).

2. The oil guide member (100) according to claim 1, wherein the first connecting portion (1) comprises an extension section (16) extending in an axial direction of the first rotating shaft, and the extension section (16) covers at least a part of the first rotating shaft in a circumferential direction of the first rotating shaft.

3. The oil guide member (100) according to claim 2, wherein the second connecting portion (2) comprises a first connecting section (21), the first connecting section (21) is disposed on a side of the extension section (16) that is adjacent to the second rotating shaft (27), and the first connecting section (21) extends in an axial direction of the extension section (16) to define the oil storage cavity (25) together with the extension section (16).

4. The oil guide member (100) according to claim 3, wherein the second connecting portion (2) further comprises:
a second connecting section (22); and
a third connecting section (23), the second connecting section (22) and the third connecting section (23) extending in a circumferential direction of the extension section (16), and the second connecting section (22) and the third connecting section (23) being located on a same side in a thickness direction of the first connecting section (21) to jointly enclose the oil storage cavity (25).

5. The oil guide member (100) according to claim 3 or 4, wherein the second connecting portion (2) further comprises a protrusion (26), the protrusion (26) is disposed on a side of the first connecting section (21) that is adjacent to the second rotating shaft (27), and the first oil outlet (24) runs through the first connecting section (21) and the protrusion (26).

6. The oil guide member (100) according to any one of claims 1 to 5, wherein a first opening (15) is formed on the first connecting portion (1), and the first opening (15) is configured to be opposite to the first rotating shaft.

7. The oil guide member (100) according to any one of claims 1 to 6, wherein the first connecting portion (1) is provided with a plurality of first oil guide ribs (11), and the plurality of first oil guide ribs (11) are all located in the oil storage cavity (25) and are spaced apart in a circumferential direction of the first connecting portion (1).

8. The oil guide member (100) according to claim 6, wherein the first connecting portion (1) is provided with a plurality of second oil guide ribs (12), the plurality of second oil guide ribs (12) are respectively located on two sides of the first opening (15), and the plurality of second oil guide ribs (12) are spaced apart in a circumferential direction of the first connecting portion (1).

9. The oil guide member (100) according to claim 6 or 8, further comprising:
a third connecting portion (3), the third connecting portion (3) being connected to an outer periphery of the first connecting portion (1) and extending in the direction away from the first connecting portion (1), the third connecting portion (3) being opposite to the first opening (15), a second opening (31) being formed on the third connecting portion (3), and the second opening (31) communicating with the first opening (15).

10. The oil guide member (100) according to claim 9, wherein the second connecting portion (2) and the third connecting portion (3) are spaced apart from each other in the circumferential direction of the first connecting portion (1); and
the first connecting portion (1) is provided with a plurality of positioning posts (13), the plurality of positioning posts (13) are spaced apart in the circumferential direction of the first connecting portion (1), and one of the plurality of positioning posts (13) is located between the second connecting portion (2) and the third connecting portion (3).

11. The oil guide member (100) according to claim 9 or 10, further comprising:
a fourth connecting portion (4), the fourth connecting portion (4) being connected to the outer periphery of the first connecting portion (1) and extending in the circumferential direction of the first connecting portion (1), and the fourth connecting portion (4) and the third connecting portion (3) being respectively located on two sides in an axial direction of the first connecting portion (1).

12. The oil guide member (100) according to claim 11, wherein a surface of a side of the fourth connecting portion (4) adjacent to the third connecting portion (3) is provided with a plurality of first protruding ribs (41) and a plurality of second protruding ribs (42); the plurality of first protruding ribs (41) are spaced apart in a radial direction of the first connecting portion (1), and each of the first protruding ribs (41) extends in the circumferential direction of the first connecting portion (1); and the plurality of second protruding ribs (42) are spaced apart in the circumferential direction of the first connecting portion (1), each of the second protruding ribs (42) extends in the radial direction of the first connecting portion (1).

13. The oil guide member (100) according to any one of claims 1 to 12, wherein the first connecting portion (1) is provided with a limiting protrusion (14), and a magnetic member (5) is mounted on the limiting protrusion (14).

14. A gear (200), comprising:
a shaft portion (201), an outer periphery of the shaft portion (201) being suitable for sleeving a first bearing (202);
a tooth portion (203), the tooth portion (203) being disposed at one end of the shaft portion (201) and configured to rotate following the shaft portion (201); and
an oil guide passage (2011), the oil guide passage (2011) being formed inside the shaft portion (201) and/or the tooth portion (203), and two ends of the oil guide passage (2011) being respectively opposite to a first oil outlet (24) of an oil guide member (100) and the first bearing (202), wherein
the oil guide member (100) is the oil guide member (100) according to any one of claims 1 to 13.

15. The gear (200) according to claim 14, wherein the oil guide passage (2011) comprises a first passage (20111) and a second passage (20112) communicating with each other, the first passage (20111) extends in an axial direction of the tooth portion (203), and the second passage (20112) extends in a radial direction of the shaft portion (201) to the first bearing (202).

16. The gear (200) according to claim 14 or 15, wherein an oil baffle plate (304) is disposed on a side inside the oil guide passage (2011) that is close to the first oil outlet (24), at least one through hole (3041) is formed on the oil baffle plate (304), and the first oil outlet (24) communicates with the oil guide passage (2011) through the through hole (3041).

17. A reducer assembly (300), comprising:
a housing (305), a differential (301) being disposed in the housing (305);
an oil guide member (100), the oil guide member (100) being movably sleeved on a rotating shaft of the differential (301), and the oil guide member (100) being the oil guide member (100) according to any one of claims 1 to 13;
a drive gear (200); and
a driven gear (303), the drive gear (200) meshing with the driven gear (303), the driven gear (303) being fixedly connected to the differential (301), the driven gear (303) being sleeved on the rotating shaft of the differential (301) and being configured to stir oil in the housing (305) after being driven by the drive gear (200) to provide lubricating oil, and the drive gear (200) being the gear (200) according to any one of claims **14** to 16.

18. The reducer assembly (300) according to claim 17, wherein the oil guide member (100) is fixedly connected to the housing (305).
